# EUROPEAN PATENT APPLICATION

(11) **EP 1 617 368 A1**
(43) Date of publication of application: **18.01.2006**
(21) Application number: 05425421.4
(22) Date of filing: 10.06.2005
(51) Int. Cl.: G06Q 10/00

(54) **System of continuous evaluation of transparency in the organisational processes and behaviours based on ICT**

(30) Priority: 15.07.2004 IT fo20040016
(71) Applicant: C.I.S.E. Centro per l'Innovazione e lo Sviluppo Economico - Az. Spec. C.C.I.A.A. Forli-Cesena, 47100 Forli FO (IT)
(72) Inventor: Valli, Luca, 47100 Forli (FO) (IT)

(57) **Abstract**

The system of continuous evaluation of the organisational processes and behaviours ⁴⁶based on ICT (hereinafter referred as S.) is a process based on the use of ICT (*Information Communication Technology*) to:
1. monitor the management and the evolution of the company processes and ensure their outside communication and transparency;
2. ⁴⁷allow the continuity and consistency of the information collected, through a process of "triangulation of monitoring" of the audit processes that are traditionally available to the third party certification systems.

S. is based on a multi-stakeholder platform, i.e. on the possibility for all stakeholders ⁴⁸involved in the organisation's production process to intervene by providing a contribution of evaluation. (Table 1)

## Description

### STATE OF THE ART

¹ Audits in certification systems that are guaranteed by independent third parties raise the problem that the collection of relevant information for the evaluation of compliance has time and space limitations, which are related to the timing that is scheduled for the audits that may prejudice ifs full relevance.

² During the latter, in fact, apart from auditors' professionalism, the point of view that emerges highlights the situation in a certain time X and in a place Y, without it is possible to evaluate and monitor the evolution of the organisational processes and behaviours over time, and hence, to be able to point out, timely and if need be, any ³significant information from the organisation on deviations from the scheme or to the non achievement of improvement goals fixed.
The process, which is the object of this patent, intends, through the use of ICT systems, to overcome the problem highlighted.

### ⁴DEFINITIONS

**Transparency profile**: dimension that relates to aspects of the management of an organisational structure for which it is required to start the monitoring process within the system. As non exhaustive example we remind the social accountability, quality of ⁵production processes, supply chain traceability .
**Organisation that begins the process**: public or private entity that has begun the process and subscribed a special protocol.
**Alerts:** information received by the process Administrator, following the modalities ⁶described in the protocol, which come from the stakeholders and the monitors on the dimensions of the transparency profile for which the organisation has started the process.
**Monitors**: privileged observers who are skilled on the transparency profile chosen and in the mechanism of functioning of the whole process.
⁷**Monitoring:** action of distance observation and evaluation, by posting alerts to the process Administrator, of the organisational behaviours for which the organisation has started the process and subscribed the proper protocol.
**Protocol:** document that regulates the process the organisations that starts it, the ⁸Administrator and the Stakeholders involved commit to know and respect.
**Triangulation of Monitoring:** continuous and consistent integration over time of the information flow coming from the audit processes and that is traditionally available in the third party certification systems.

### ⁹DESCRIPTION

It is a process based on the use of ICT (Information Communication Technology) to:
- monitor the management and the evolution of the company processes and ensure its outside communication and transparency;
   ¹⁰• allow the continuity and consistency of the information collected through a process of "triangulation of monitoring", of the audit processes traditionally available in the third party certification systems.

S. is based on a multi-stakeholder platform, i.e. on the possibility for all stakeholders ¹¹involved in the organisation's production process to intervene by providing a contribution of evaluation.

S. envisages that the organisation, upon choosing the transparency profile for which it intends to commit (e.g. social accountability, quality of the production processes, ¹²supply chain traceability etc), registers in the on-line platform and subscribe a protocol in which it declares to know and approve the process of information management described in the protocol; the latter basing on the possibility for the organisation to receive alerts and remarks on the ways in which, with reference to the profile chosen, and ¹³via internet, the organisational behaviours are perceived. S. foresees the organisation accepts that the number of alerts received is publicly accessible, while their specific content only reaches the organisation and the System Administrator and, in some special cases, established by the single protocol, also other entities that are in relation with the ¹⁴organisation. The process includes that the organisation has to appoint a minimum number of privileged observers (defined as 'monitors') having the skills in the transparency profile selected and in the mechanism of functioning of the entire process.

With regard to the profile selected, the process may be integrated by the special ¹⁵requirements of on-line publication of completion information material.
(a) The process is based on an on-line tool in which organisations may:
   1. Register through an on-line procedure, by providing some data on the activities of the organisation, and a short description of their activities ¹⁶subscribing a protocol that defines the transparency system that the organisation intends to choose; organisations may choose the monitoring profile they deem appropriate to their needs among those available (see Table 2).
   ¹⁷2. continue being visible on the website, by accepting the functioning of the alert system and the remarks coming from the so-called stakeholders: the core of the system is in fact the possibility to allow the stakeholders' widest representation to contribute by providing their evaluation of the processes ¹⁸and behaviours the organisation has actually put in place in form of remarks, which relate to the transparency profile and to the dimensions selected by the organisation.
(b) In general, the content of the alerts/remarks regards the coherence between ¹⁹what has been publicly declared on the transparency profile selected and the organisational processes and behaviours performed and perceived by all those who deem to have the elements to criticize them, the system anyone who is able to participate to the monitoring via internet to contribute to the process; alerts are sent to the recipient ²⁰organisations through the information system; the system includes a restricted area where the organisations registered will be able to view the content of the single alerts and define the modalities to reply, in a secure way. Organisations can also decide to undertake actions in response to the remarks received (as for instance "Not to undertake ²¹any action as the remark is considered groundless" "Consider the remark relevant but decide to undertake remedy actions in the future" or also "Consider the remark relevant and having undertaken proper actions". The organisation shall also comment on the observations freely. All these contents will be disclosed to the process administrator, and ²²basing on the transparency profile selected, also to other stakeholders involved with the organisation.
(c) The process guarantees the possibility to establish relations among the organisations entered (e.g. supplier customer) and an automatic mechanism to post alerts ²³to the customer chain with whom a relationship has been included so to ensure the dissemination of the communication and the control by the customer chain. It is possible to allow, in this way, following to the transparency profile selected, the creation of a system to qualify suppliers that can be used by the certification schemes that envisage its ²⁴implementation.
(d) The process allows to view under statistic form, in a public accessible area, like for example to a general level, the following data: number of the organisation entered, number of qualified monitor, number of alerts sent, number of relations supplier ²⁵customer activated, while statistics on the following will be viewed for the single organisation: effective alerts, alerts sent, alerts analysed by the organisation concerned, alerts taken on by the organisation concerned, alerts managed successfully, alerts analysed by customers, alerts taken on by customer, alerts taken on by the administrator.
²⁶(e) S. envisages the interaction with a group of people with professional skills on the domain that is subject of the monitoring (monitor) who in delegated or postponed or self-declared representation of groups created or artificially segmented of representatives of interested parties, carry out a semi-structured activity of continuous ²⁷monitoring, also to act as monitor there is the subscription of a protocol and the registration on line (see Table 3). Monitors are designed by the organisation, and selected among those available in a proper database hold by the process Administrator. The monitor selected by the organisation will however have the faculty whether to accept the ²⁸appointment or not. The access to this database and the qualification of monitor are regulated by the possession of specific skills on the transparency profile selected and of the knowledge of the mechanisms of management of the monitoring process.
(f) Monitors may be recognised as spokesmen of the point of view of some ²⁹institutional entities as, among others, employers' associations, public entities, non governmental organisation, workers' associations etc. The latter are defined 'Partners for Development' on the transparency profile chosen. The partner for development validate the monitor profile through an procedure on-line that envisages the access to a restricted ³⁰area to which it is possible to access only after subscribing the proper protocol. The validation process unfolds with the monitor's name appearing close to the partner's logo together with the wording "validated by... (partner's name).
(g) The process guarantees hence a major relevance of the audits of third party ³¹certification systems, by integrating those dynamics said systems presently rely on (audits scheduled, questionnaires etc) to collect information with a continuous monitoring over time of the dimensions that are subject of the audit. Said monitoring will be carried ³²out by a plurality of entities and points of view that represent the various stakeholders involved in the organisations' production process.

The above allows a systematic audit over time, that is then not limited to the auditor(s)' presence in the organisation, to the maintenance and/or implementation of the ³³requirements of the certification scheme.

### EXAMPLE OF POSSIBLE FUNCTIONING OF THE ALERT SYSTEM AS ILLUSTRATED IN TABLE (4).

(1) Anyone may submit an alert on the transparency profile for which the company ³⁴has started the process.
(2) The information system recognises basically two types of users, Generic Users (in the chart they are identified with letter U and from the path constituted by the continuous line of the respective alerts) and Generic Monitors (in the chart they are identified with ³⁵the letter M and from the path constituted by the dotted line of the respective alerts). The generic user is anyone willing to intervene in the process as s/he considers himself/herself a stakeholder: the latter may register in the web-site or remain anonymous.
³⁶(3) Monitors, on instead, are qualified observers who participate in the monitoring system.
(4) Alerts are recorded by the automatic system based on the use of ICT, which provides to sort them out, according to their provenance (from Monitors of by Generic ³⁷Users).
(5) Alerts submitted by generic users (a continuous line path) are only forwarded to the company and to the administrator. Their path does not reach any other stakeholder. In case the alert is on the relationship between the company and a monitor (the way the ³⁸company has designed the monitor, his/her capacity to represent effectively a stakeholder etc), the alert is also copied to the monitor who is subject of the alert.
(6) In case they are forwarded by a monitor, alerts follow a different path: they still reach the company and the watch administrator, but in case they involve some company's ³⁹customers included in the watch, alerts are forwarded to the latter, although with a time delay.
(7) During this period of time, before alerts reach its clients, the company has the opportunity to comment on the alert with the remarks it deems convenient basing on the ⁴⁰alerts' nature. After this span of time, both alert and comment, if added, reach customers' organisations.

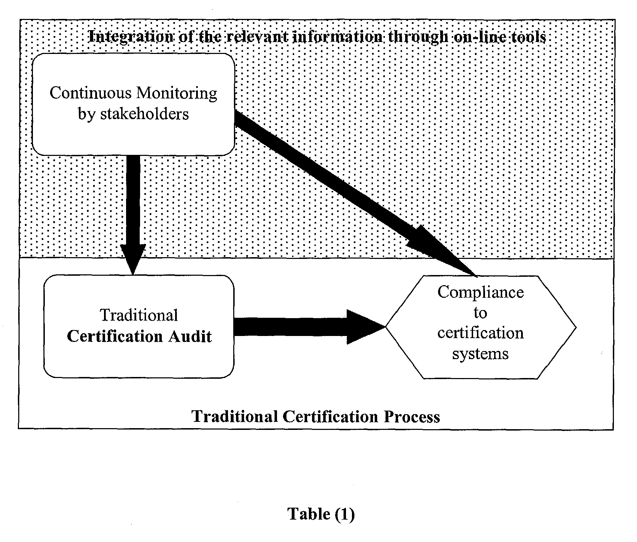

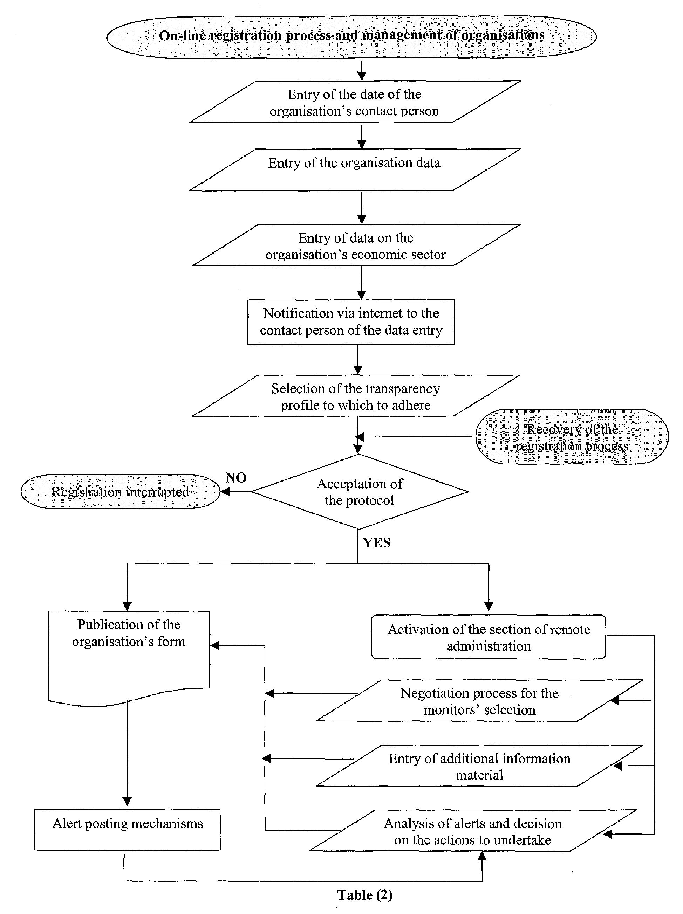

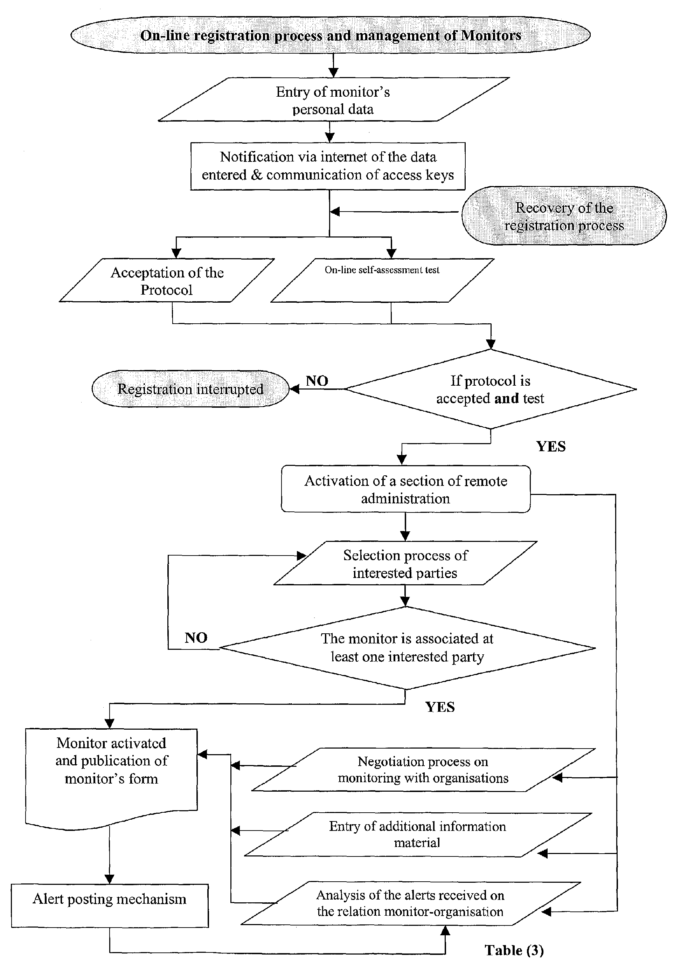

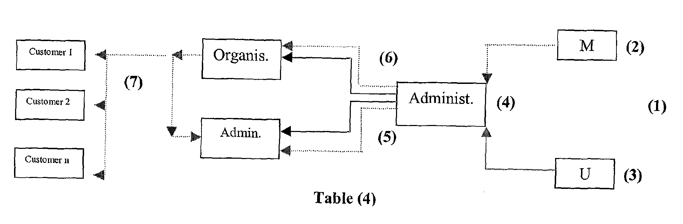

## Claims

1. Monitoring of organisational behaviours through ICT.

2. ⁴¹Integration of traditional audit processes, thanks to the use of ICT, of third party certification systems with the continuous monitoring of organisational behaviour or processes relating to the different schemes of certification (depending on the process started) through the use of information coming from a plurality of entities ⁴²and of points of view that represent the various stakeholders involved in the organisations' production process.

3. Verification on the organisations' transparency through their continuous visibility ensured by ICT systems.

4. ⁴³Direct involvement of the stakeholders in the evaluation and communication of the transparency profiles activated by companies.

5. The receipt of remarks via internet and, accordingly, the creation of information dossier on the activities of those organisations that activate the process.

6. ⁴⁴Definitions, qualifications and functions of monitors.

7. Timely communication via internet of the organisations' reactions on the alerts sent.

8. Creation of relations among the organisations entered and interaction through ICT

9. ⁴⁵System of evidence of supply chain transparency.

10. Definitions, qualifications an functions of Partner for Development.
